# EUROPÄISCHE PATENTSCHRIFT

(11) **EP 0 733 846 B1**
(45) Veröffentlichungstag und Bekanntmachung des Hinweises auf die Patenterteilung: **02.08.2000**
(21) Anmeldenummer: 95119936.3
(22) Anmeldetag: 18.12.1995
(51) Int. Cl.: F16L 41/06, F16L 47/00

(54) **Vorrichtung zum Anbohren von Kunststoffrohren von Versorgunsleitungen**
Device for tapping plastic pipes of supply conduits
Dispositif de perçage de tuyaux en plastique de conduites d'alimentation

(30) Priorität: 19.03.1995 DE 19509240; 31.07.1995 DE 19527991
(43) Veröffentlichungstag der Anmeldung: 25.09.1996
(73) Patentinhaber: Jeschke, Immanuel, D-31157 Sarstedt (DE)
(72) Erfinder: Jeschke, Immanuel, D-31157 Sarstedt (DE)
(74) Vertreter: Junius, Walther, Dr.

(56) Entgegenhaltungen:
- EP-A- 0 622 171
- US-A- 4 365 144
- US-A- 4 436 987

## Beschreibung

Die Erfindung betrifft eine Vorrichtung zum Anbohren von Kunststoffrohren von Versorgungsleitungen, bestehend aus einem mit einem radial angeordneten Stutzen versehenen Sattel in Form einer Rohrhalbschale, die mit einer mattenförmigen Heizdrahtanordnung an ihrer inneren Oberfläche versehen ist, und aus einem Widerlager in Form einer zweiten Halbschale, die mit dem Sattel mechanisch zusammenzuklemmen ist.

Eine derartige Vorrichtung ist z.B. aus der EP-A-622 171 bzw. der US-A-4 436 987 bekannt. Sie wird dort in Anwendung gebracht, wo an einer im Betrieb befindlichen und unter Betriebsdruck stehenden Versorgungsleitung aus Kunststoffrohren ein Abzweig einzubauen ist oder eine Absperrung vorzunehmen ist. An diesem Ort wird der rohrhalbschalenförmige ebenfalls aus Kunststoff hergestellte Sattel an dem Rohr der Versorgungsleitung angeklemmt, wozu oftmals ein Widerlager in Form einer zweiten Halbschale verwendet wird, das mit dem Sattel mechanisch verspannt wird. Dann wird durch die Heizdrahtanordnung ein elektrischer Strom bestimmter Stärke und Spannung eine bestimmte Zeit lang geleitet, wodurch die aneinander anliegenden Oberflächen von Sattel und Rohr der Versorgungsleitung in den schmelzflüssigen Zustand versetzt werden und dabei miteinander verschweißen. Nun ist die Vorrichtung für die Durchführung einer Bohrung im Rohr der Versorgungsleitung vorbereitet, die nach Aufsetzen einer Schleusenanordnung auf den am Sattel befindlichen Stutzen und nach Einbringen eines Bohrers in den Stutzen durchgeführt wird.

Dort, wo nach dem Schweißvorgang das Widerlager nicht mehr notwendig ist, kann es für eine weitere Verwendung an anderem Ort abgebaut werden. Denn die Schweißung ist im allgemeinen so großflächig erfolgt, daß ein Abreißen des Sattels unter dem Betriebsdruck der Versorgungsleitung nicht zu befürchten ist.

Die Heizdrahtanordnung kann direkt unter der inneren Oberfläche des Sattels angeordnet sein, sie kann aber auch als eine gesonderte Matte hergestellt sein, in der die Heizdrähte in einer Kunststoffschicht schlaufenförmig eingebettet sind. Diese Matte wird dann vor der Montage des Sattels zwischen dessen innerer Oberfläche und der äußeren Oberfläche des Rohres eingelegt.

Diese bekannte Anordnung hat sich im Betrieb dort bewährt, wo für die Schaffung von Abzweigen die Stutzen am Sattel einen geringeren Innendurchmesser als das Rohr haben. Kritisch wird diese bekannte Anordnung dort, wo in Hochdruckversorgungsleitungen Absperrpfropfen einzuführen sind, die den gleichen Innendurchmesser wie das Rohr der Versorgungsleitung haben. Denn dort reicht die verschweißte Fläche zwischen den achsparallelen Kanten des Sattels und dem Stutzen nicht aus, um an dieser Stelle sicher einen Durchtritt des Versorgungsmediums aus der Versorgungsleitung zu vermeiden.

Die Erfindung vermeidet die Nachteile des Standes der Technik. Es ist die Aufgabe der Erfindung, mit einfachen Mitteln und in einfacher Weise einen sicheren Sitz des Sattels auf der Versorgungsleitung und damit eine absolute Dichtheit am Ort des Sattels zu erreichen.

Diese Aufgabe läßt sich in verschiedener Weise gemäß Anspruch 1, 2 oder 3 lösen.

Mit dieser Vorrichtung läßt sich mit einfachen Mitteln und in einfacher Weise ein sicherer Sitz des Sattels auf der Versorgungsleitung erreichen. Denn das Widerlager wird mit dem Rohr der Versorgungsleitung und mit den Schenkeln des Sattels fest verschweißt, so daß um das Rohr der Versorgungsleitung aus Sattel und Widerlager ein Verstärkungsring entstanden ist, der einen sicheren Sitz des Sattels und eine lebenslange Dichtheit an dieser kritischen Stelle gewährleistet.

Besonders günstige Ausführungsformen dieser Vorrichtung ergeben sich durch die Merkmale der Unteransprüche.

Das Wesen der Erfindung ist nachstehend anhand eines in der Zeichnung schematisch dargestellten Ausführungsbeispieles näher erläutert. Es zeigen:
- Fig.1: einen Querschnitt durch eine Vorrichtung am Ort des vom Sattel getragenen Stutzens,

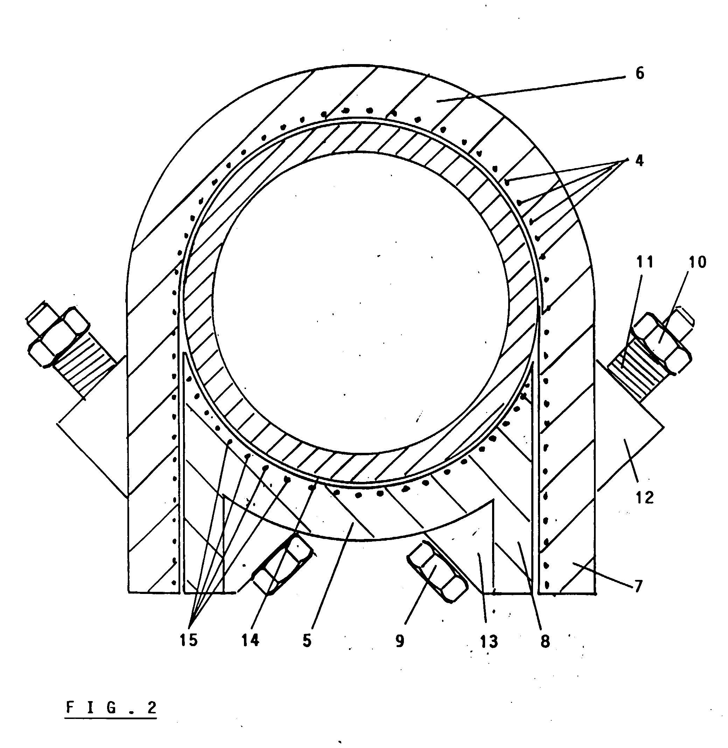

- Fig.2: einen Querschnitt durch diese Vorrichtung am Ort hinter dem vom Sattel getragenen Stutzen,

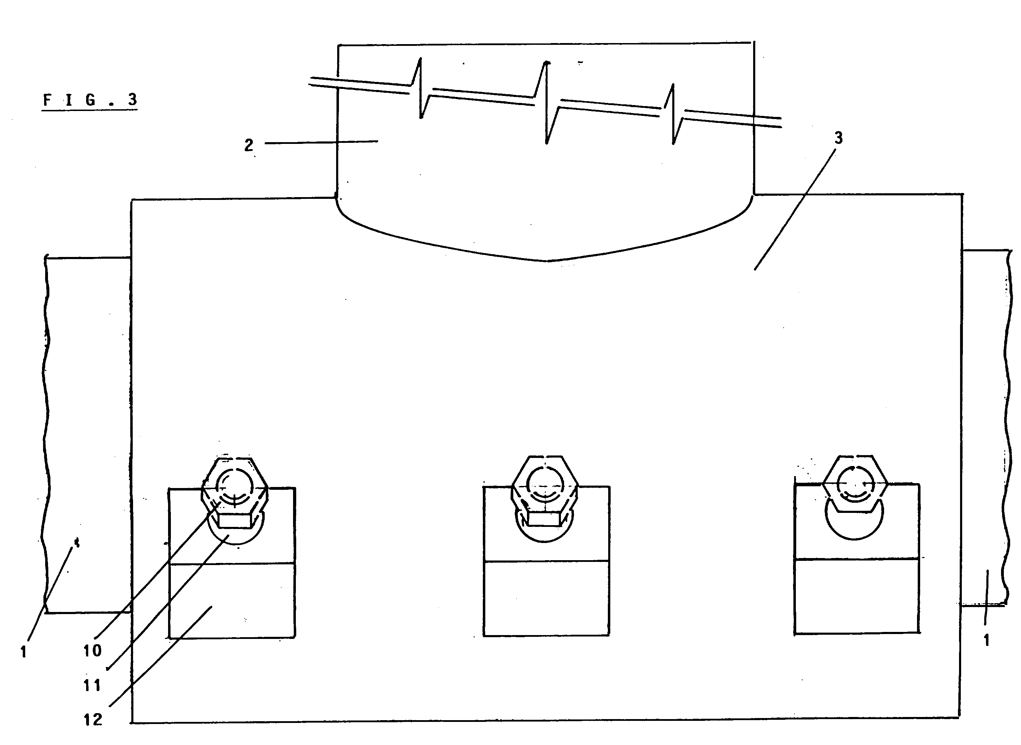

- Fig.3: eine Seitenansicht der Vorrichtung,
- Fig.4: eine weitere Ausführungsform der erfindungsgemäßen Vorrichtung, bei der das Widerlager mit Füßen versehen ist und die Innenfläche des Widerlagers beidseitig in im Querschnitt dreieckförmige Leisten ausläuft.
- Fig.5: eine Ausführungsform der erfindungsgemäßen Vorrichtung, bei der der Sattel und das Widerlager in einer die Rohrachse durchdringenden horizontalen Ebene zu beiden Seiten Vorsprünge tragen,
- Fig.6: eine Ausführungsform der erfindungsgemäßen Vorrichtung, bei der der Sattel und das Widerlager in einer die Rohrwandung an ihrer untersten Stelle durchdringenden horizontalen Ebene zu beiden Seiten Vorsprünge für das Ansetzen von Klammern tragen,
- Fig.7: eine Ausführungsform der erfindungsgemäßen Vorrichtung, bei der der Sattel und das Widerlager in einer die Rohrachse durchdringenden horizontalen Ebene zu beiden Seiten Vorsprünge zum Ansetzen von Klammern tragen, wobei der Sattel in zwei das Rohr teilweise umfassende lappenförmige Ansätze ausläuft, welche in einer Ausnehmung des Widerlagers liegen,
- Fig.8: eine Ausführungsform der erfindungsgemäßen Vorrichtung, bei der der Sattel und das Widerlager in einer die Rohrachse durchdringenden horizontalen Ebene zu beiden Seiten Vorsprünge zum Anstzen von Klammern tragen, wobei der Sattel in zwei das Rohr teilweise umfassende lappenförmige Ansätze ausläuft, welche in einem Zwickel zwischen der inneren Oberfläche des Widerlagers und dem Rohr liegen,
- Fig.9: ein Verlegeschema der den Bereich zwischen Sattel und Rohr erwärmenden Heizdrähte.

Die Vorrichtung zum Anbohren von Kunststoffrohren 1 von Versorgungsleitungen besteht aus einem mit einem radial angeordneten Stutzen 2 versehenen Sattel 3 in Form einer Rohrhalbschale, die mit einer mattenförmigen Heizdrahtanordnung 4 an ihrer inneren Oberfläche versehen ist, und aus einem Widerlager 5 in Form einer zweiten Halbschale, die mit dem Sattel 3 mechanisch zusammenzuklemmen ist. Die mattenförmigen Heizdrahtanordnung 4 kann in die innere Oberfläche des Sattels 3 eingearbeitet sein, sie kann aber auch aus einer aus Kunststoff gefertigten selbständigen Matte bestehen, in der die Heizdrähte liegen und die zwischen dem Sattel und/oder dem Widerlager eingelegt wird.

Diese Vorrichtung zeichnet sich dadurch aus, daß sich beidseitig an den halbrunden Teil 6 des Sattels 3 achsparallel in Tangentialebenen eben verlaufende Schenkel 7 einstückig anschließen. Dadurch erstreckt sich die Innenwandung des Sattels 3 über die Mittelebene des Kunststoffrohres 1 hinaus und verläuft in diesem Bereich genähert tangential weiter. Die Seitenwandungen 8 des Widerlagers 5 verlaufen parallel zu diesem Bereich oder unter einem spitzen Winkel geringer Gradzahl. Dabei erstreckt sich die Innenwandung des Sattels 3 über die Mittelebene des Kunststoffrohres 1 hinaus und verläuft parallel zu den Seitenwandungen 8 des Widerlagers 5. Die parallel zu den Seitenwandungen 8 des Widerlagers 5 verlaufenden Teile des Sattels 3, das sind die Schenkel 7, sind ebenfalls mit einer matten, förmigen Heizdrahtanordnung versehen. Dadurch ist erreicht, daß nach dem Schweißvorgang die Innenwandung des Sattels 3 in ihrem sich über die Mittelebene des Kunststoffrohres 1 hinaus erstreckenden und parallel zu den Seitenwandungen 7 des Widerlagers 5 verlaufenden Teil, das ist zu beiden Seiten des Sattels 3 der jeweilige Schenkel 7, mit den Seitenwandungen 8 des Widerlagers 5 verschweißt ist.

Für den Schweißvorgang sind der Sattel 3 und das Widerlager 5 durch mechanische Klemmvorrichtungen zusammenspannbar, die eine Kraftkomponente parallel zur Seitenwand 8 des Widerlagers 5 und eine weitere Kraftkomponente senkrecht zur Seitenwand 8 des Widerlagers 5 ausüben. Dabei ist es einfach und zweckmäßig, wenn die Klemmvorrichtungen aus einer Schraube 9, einer Mutter 10 und einer Feder 11 bestehen. Für die Anbringung dieser Klemmvorrichtung ist es vorteilhaft, wenn schräg zu der Oberfläche der Seitenwandungen des Widerlagers 5 verlaufende Löcher in diesen Seitenwandungen 8 des Widerlagers 5 und mit diesen Löchern fluchtend weitere Löcher in den über die Mitte hinausgehenden Schenkeln des 7 Sattels 3 vorgesehen sind. Dabei ist es vorteilhaft, wenn die Löcher in Seitenwandungen 8 des Widerlagers 5 und in den Schenkeln 7 des Sattels 3 sich durch an diesen angeformte Ansätze 12,13 erstrecken, die die Form von diagonal geteilten Quadern aufweisen.

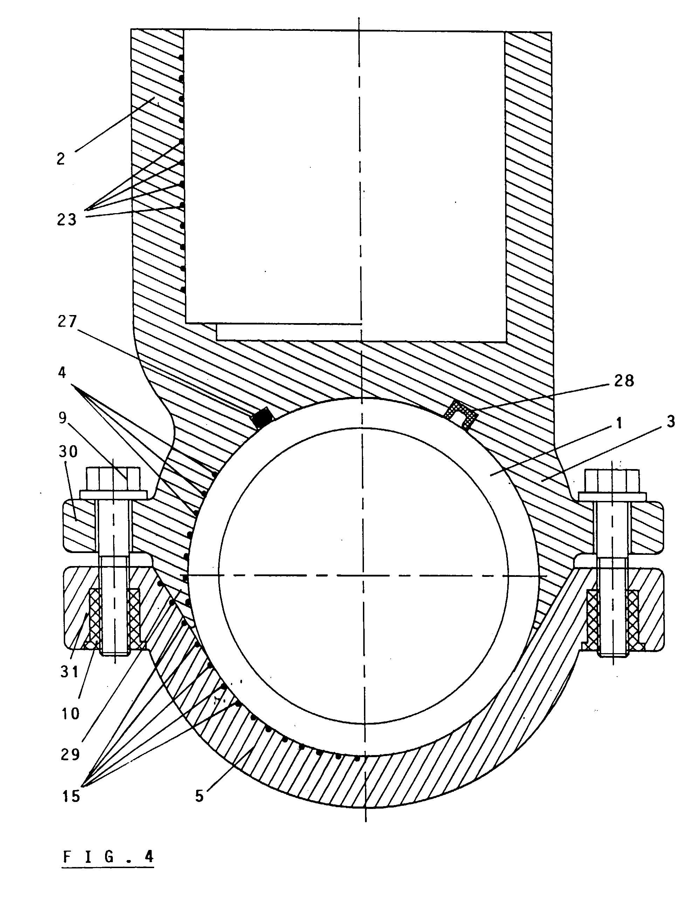

Eine weitere, in Fig.4 dargestellte Ausführungsform der erfindungsgemäßen Vorrichtung zeichnet sich dadurch aus, daß das Widerlager 5 mit Füßen versehen ist. Dann läßt sich die Vorrichtung auf Fundamenten in einfacher Weise aufstellen und auch befestigen. In den Füßen sind Muttern 10 eingeformt, in welche Schrauben 9 eingreifen, die Löcher in den Vorsprüngen 30 am unteren Ende des Sattels 3 durchsetzen.

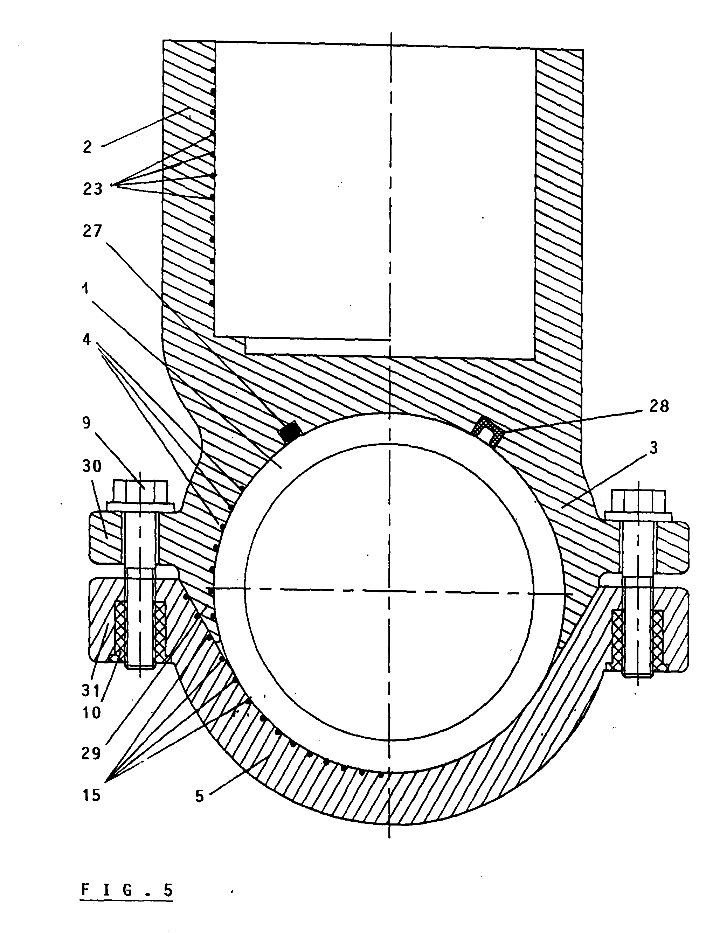

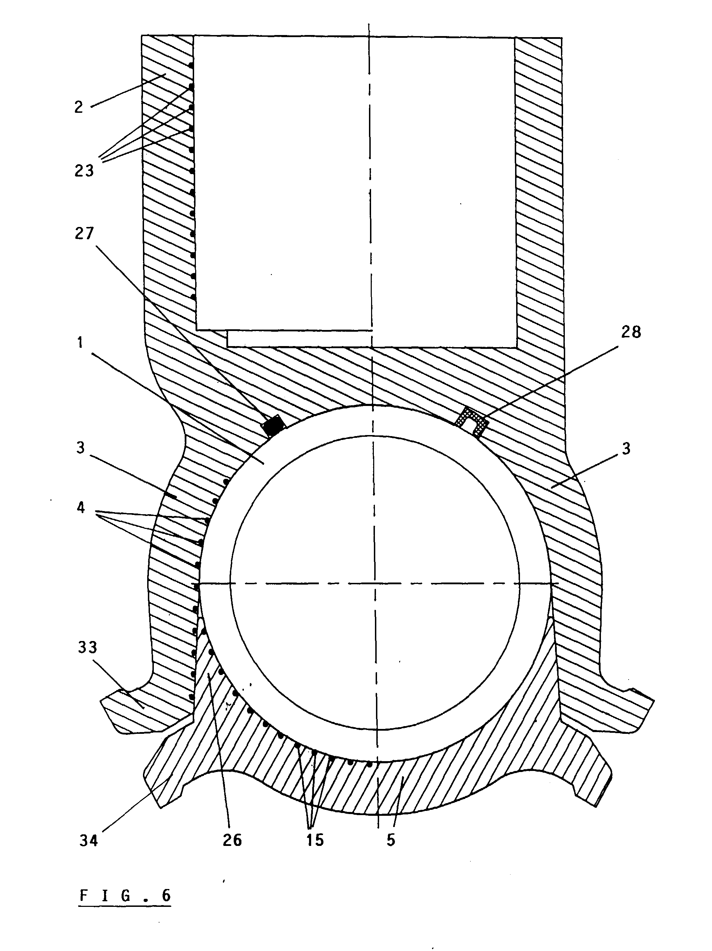

Fig.5 zeigt eine Ausführungsform der erfindungsgemäßen Vorrichtung, bei der der Sattel 3 und das Widerlager 5 in einer die Rohrachse durchdringenden horizontalen Ebene zu beiden Seiten Vorsprünge 30,31 tragen. Der Vorsprung 31 ist mit einer eingeformten Mutter 10 versehen, in die eine ein Loch im Vorsprung 30 durchsetzende Schraube 9 eingeschraubt ist. Der Sattel 3 läuft beidseitig in im Querschnitt dreieckförmige Leisten 29 aus, deren Außenseite eine Anschmelzfläche für die Anschweißung der Innenfläche des Widerlagers bildet. Die gesamte Innenfläche des Widerlagers, auch im Bereich der dreieckförmigen Leiste 29, ist mit Heizdrähten versehen.

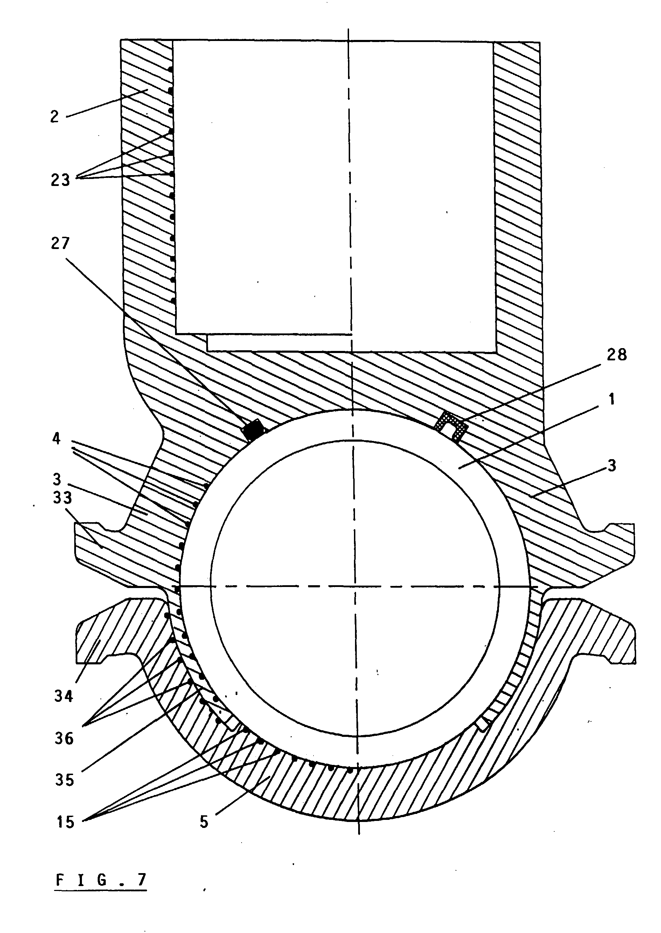

Fig.6 zeigt eine Ausführungsform der erfindungsgemäßen Vorrichtung, bei der der Sattel 3 und das Widerlager 5 in einer die Rohrwandung an ihrer untersten Stelle durchdringenden horizontalen Ebene zu beiden Seiten Vorsprünge 30,31 für das das Ansetzen von Klammern tragen. Das Widerlager 5 läuft beidseitig in im Querschnitt dreieckförmige Leisten 26 aus, deren Außenseite eine Anschmelzfläche für die Anschweißung der Innenfläche des Sattels 3 bildet. Die gesamte Innenfläche des Sattels 3, auch im Bereich der dreieckförmigen Leiste 26, ist mit Heizdrähten 4 versehen.

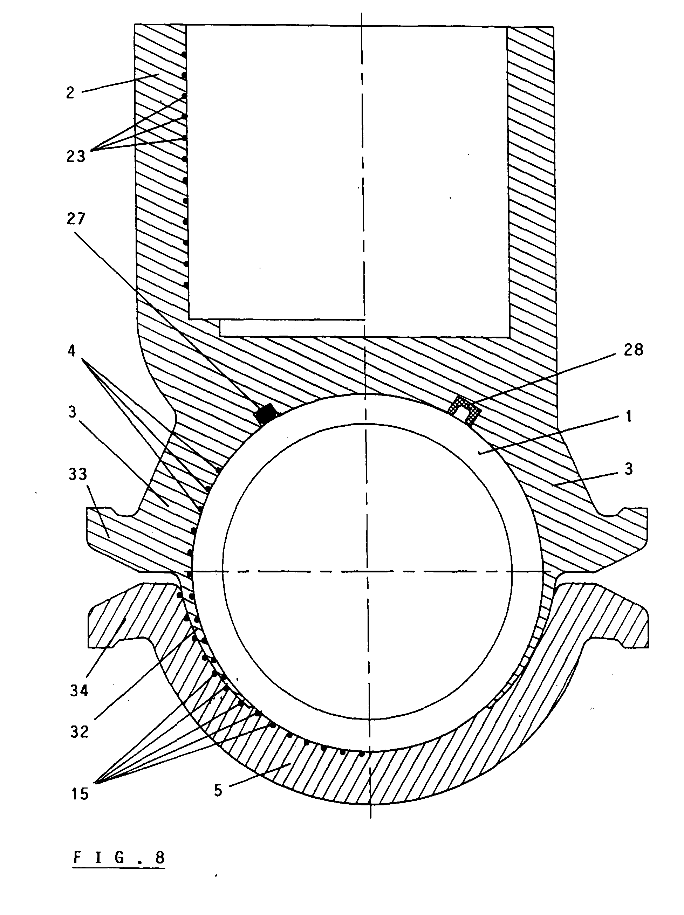

Fig.7 zeigt eine Ausführungsform der erfindungsgemäßen Vorrichtung, bei der der Sattel 3 und das Widerlager 5 in einer die Rohrachse durchdringenden horizontalen Ebene zu beiden Seiten Vorsprünge 33,34 zum Anstzen von Klammern tragen, wobei der Sattel 3 in zwei das Rohr 1 teilweise umfassende lappenförmige Ansätze 35 ausläuft, welche in einer Ausnehmung des Widerlagers 5 liegen. In der Oberfläche dieser Ausnehmung des Widerlagers 5 liegen Heizdrähte 36 zur Verschmelzung der lappenförmigen Ansätze 35 mit dem Widerlager 5, während auf der anderen Seite der lappenförmigen Ansätze 35 sich die Heizdrähte 4 fortsetzen, um eine Verschmelzung der lappenförmigen Ansätze 35 mit dem Rohr 1 zu erzielen.

Fig.8 zeigt eine Ausführungsform der erfindungsgemäßen Vorrichtung, bei der der Sattel 3 und das Widerlager 5 in einer die Rohrachse durchdringenden horizontalen Ebene zu beiden Seiten Vorsprünge 33,34 zum Ansetzen von Klammern tragen, wobei der Sattel 3 in zwei das Rohr 1 teilweise umfassende lappenförmige Ansätze 32 ausläuft, welche in einem Zwickel zwischen der inneren Oberfläche des Widerlagers 5 und dem Rohr 1 liegen. Die sich über die Innenfläche der lappenförmigen Ansätze 32 fortsetzenden Heizdrähte 4 bewirken eine Verschmelzung der lappenförmigen Ansätze 32 mit dem Rohr 1, die Heizdrähte 15 des Widerlagers 3 bewirken eine Verschmelzung des Widerlagers 3 mit den lappenförmigen Ansätzen 32.

Zur weiteren Erhöhung der Festigkeit ist das Widerlager 5 im Bereich der halbschalenförmigen Anlagefläche 14 am Rohr ebenfalls mit einer mattenförmigen Heizdrahtanordnung 15 ausgestattet .

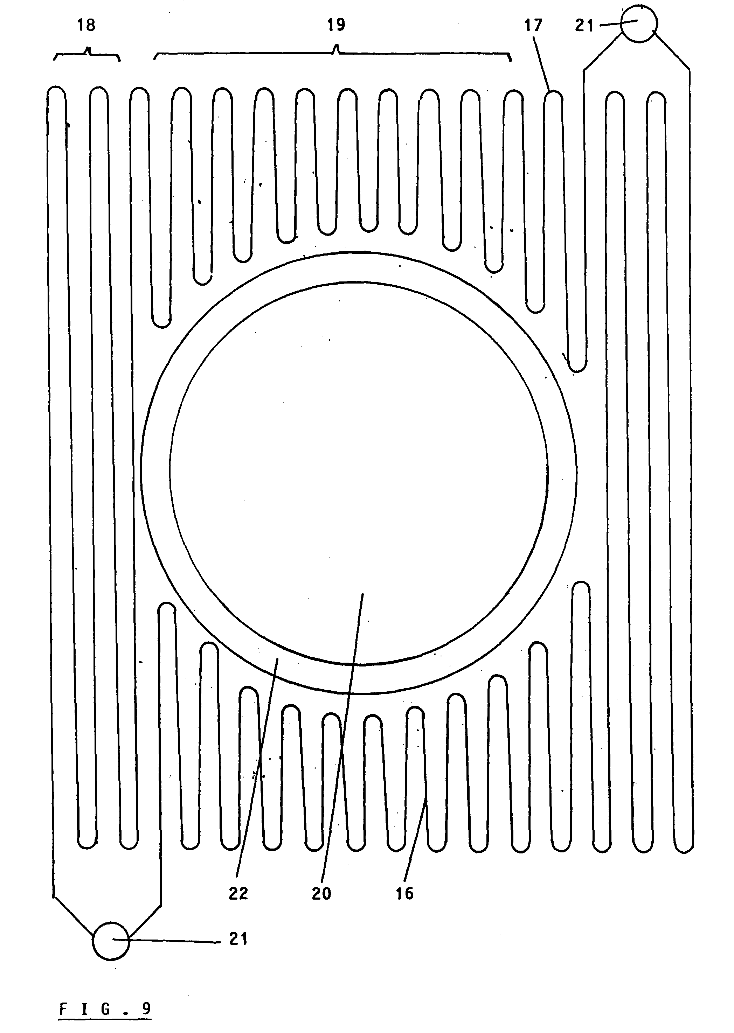

Die in Fig.9 dargestellte mattenförmige Heizdrahtanordnung 4 des Sattels 3 besteht aus zwei Heizdrähten 16, 17, welche zickzackförmig geführt jeweils einen Bereich 18 von mehreren langen Drahtschlaufen und daran anschließend einen Bereich 19 von kurzen Drahtschlaufen bilden, die beide um 180° gegeneinander versetzt um die Fläche 20 in der Verlängerung des Rohrstutzens 2 angeordnet sind. Dabei ist jeweils das Ende des einen Heizdrahtes 16 im Bereich 18 der langen Schlaufen mit dem Ende des anderen Heizdrahtes 17 im Bereich der kurzen Schlaufen in einer Klemmstelle 21 zusammengeklemmt, an die weiterhin jeweils ein Draht der Zuführungsleitung elektrischer Energie angeklemmt ist. Dabei weisen die Heizdrahtschlaufen im Bereich kurzer Schlaufen unterschiedliche Längen auf, wobei die kürzeren in der Mitte dieses Bereiches angeordnet sind.

In der inneren Oberfläche des Sattels 3 rings um die Fläche 20 ist in der Verlängerung des Rohrstutzens 2 eine Nut für die Aufnahme eines Dichtringes eingeformt, der ein O-Ring 27 oder eine Lippendichtung 28 sein kann.

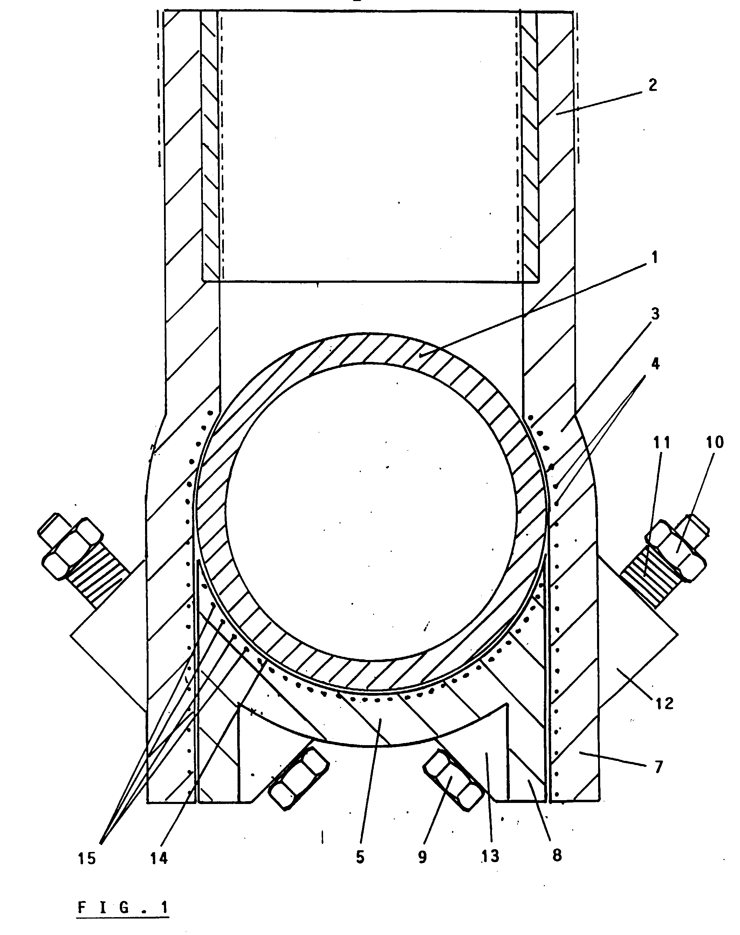

Der Stutzen 2 kann, wie in Fig.1 dargestellt, mit einem Innengewinde versehen sein, er kann aber auch, wie in Fig.4 gezeigt, mit einer an seiner inneren Oberfläche angebrachten oder eingelegten Heizdrahtwicklung zum Anschweißen eines Rohres versehen sein.

### Liste der Bezugszeichen

- 1: Kunststoffrohr
- 2: Stutzen
- 3: Sattel
- 4: Heizdrahtanordnung
- 5: Widerlager
- 6: halbrunder Teil
- 7: Schenkel
- 8: Seitenwand
- 9: Schraube
- 10: Mutter
- 11: Feder
- 12: Ansatz
- 13: Ansatz
- 14: Anlagefläche
- 15: Heizdrahtanordnung
- 16: Heizdraht
- 17: Heizdraht
- 18: Bereich langer Drahtschlaufen
- 19: Bereich kurzer Drahtschlaufen
- 20: Fläche
- 21: Klemmstelle
- 23: Heizdrahtwickling
- 25: Heizdraht
- 26: dreieckförmige Leiste
- 27: 0-Ring
- 28: Lippendichtung
- 29: dreieckförmige Leiste
- 30: Vorsprung
- 31: Vorsprung
- 32: lappenförmiger Ansatz
- 33: Vorsprung
- 34: Vorsprung
- 35: lappenförmiger Ansatz
- 36: Heizdraht

## Patentansprüche

1. Vorrichtung zum Anbohren von Kunststoffrohren von Versorgungsleitungen (1), bestehend aus einem mit einem radial angeordneten Stutzen (2) versehenen Sattel (3) in Form einer Rohrhalbschale,
die mit einer mattenförmigen Heizdrahtanordnung (4) an ihrer inneren Oberfläche versehen ist,
und aus einem Widerlager (5) in Form einer zweiten Halbschale, die mit dem Sattel (3) mechanisch zusammenzuklemmen ist,
dadurch gekennzeichnet,
daß sich beidseitig an den halbrunden Teil des Sattels (3) achsparallel in Tangentialebenen verlaufende Schenkel (7) einstückig anschließen,
daß sich die Innenwandung des Sattels (3) über die zwischen den Schenkeln (7) liegende Mittelebene des Kunststoffrohres (1) hinaus erstreckt,
daß die Seitenwandungen (8) des Widerlagers (5) oder Teile der Seitenwandungen (8) des Widerlagers (5) parallel oder unter einem spitzen Winkel geringer Gradzahl zu dem sich über die zwischen den Schenkeln (7) liegende Mittelebene des Kunststoffrohres (1) hinaus erstreckenden Bereich der Schenkel (7) verlaufen,
daß die Innenwandung des Sattels (3) in ihrem sich über die Mittelebene des Kunststoffrohres (1) hinaus erstreckenden und parallel oder unter einem spitzen Winkel geringer Gradzahl zu den Seitenwandungen (8) des Widerlagers (5) verlaufenden Teil ebenfalls mit einer mattenförmigen Heizdrahtanordnung versehen ist,
daß die Innenwandung des Sattels (3) in ihrem sich über die Mittelebene des Kunststoffrohres (1) hinaus erstreckenden und parallel zu den Seitenwandungen (8) des Widerlagers (5) verlaufenden Teil mit den Seitenwandungen (8) des Widerlagers (5) verschweißt ist.

2. Vorrichtung zum Anbohren von Kunststoffrohren von Versorgungsleitungen (1), bestehend aus einem mit einem radial angeordneten Stutzen (2) versehenen Sattel (3) in Form einer Rohrhalbschale,
die mit einer mattenförmigen Heizdrahtanordnung (4) an ihrer inneren Oberfläche versehen ist,
und aus einem Widerlager (5) in Form einer zweiten Halbschale, die mit dem Sattel (3) mechanisch zusammenzuklemmen ist,
dadurch gekennzeichnet,
daß sich beidseitig an den halbrunden Teil des Sattels (3) achsparallel tangential verlaufende Schenkel in Form von das Rohr (1) teilweise umfassenden lappenförmigen Ansätzen (35) einstückig anschließen, welche in einer Ausnehmung des Widerlagers (5) liegen, wobei sich die Innenwandung des Sattels (3) über die zwischen den Schenkeln liegende Mittelebene des Kunststoffrohres (1) hinaus erstreckt,
daß die innen gelegenen Seitenwandungen des Widerlagers (5) oder Teile der Seitenwandungen des Widerlagers (5) parallel zu dem sich über die zwischen den Schenkeln liegende Mittelebene des Kunststoffrohres (1) hinaus erstreckenden Bereich der Schenkel (35) verlaufen,
daß die Innenwandung des Sattels (3) in ihrem sich über die Mittelebene des Kunststoffrohres (1) hinaus erstreckenden und parallel zu den inneren Seitenwandungen des Widerlagers (5) verlaufenden Teil ebenfalls mit einer mattenförmigen Heizdrahtanordnung versehen ist,
daß die Außenseite des Sattels (3) in ihrem sich über die Mittelebene des Kunststoffrohres (1) hinaus erstreckenden und parallel zu den inneren Seitenwandungen des Widerlagers (5) verlaufenden Teil mit den inneren Seitenwandungen des Widerlagers (5) verschweißt ist,
wobei die Innenflächen der im Widerlager (5) gelegenen Ausnehmungen für die Aufnahme der Schenkel (35) mit einer Heizwicklung (36) zum Verschweißen versehen ist
und wobei die Innenfläche dieser elastischen Schenkel (35) ebenfalls mit einer Heizwicklung zum Verschweißen versehen ist.

3. Vorrichtung zum Anbohren von Kunststoffrohren von Versorgungsleitungen (1), bestehend aus einem mit einem radial angeordneten Stutzen (2) versehenen Sattel (3) in Form einer Rohrhalbschale,
die mit einer mattenförmigen Heizdrahtanordnung (4) an ihrer inneren Oberfläche versehen ist,
und aus einem Widerlager (5) in Form einer zweiten Halbschale, die mit dem Sattel (3) mechanisch zusammenzuklemmen ist,
dadurch gekennzeichnet,
daß sich beidseitig an den halbrunden Teil des Sattels (3) achsparallel tangential verlaufende Schenkel in Form von das Rohr (1) teilweise umfassenden dreieckförmigen lappenförmigen elastischen Ansätzen (29,32) einstückig anschließen, welche in einem Zwickel zwischen der inneren Oberfläche des Widerlagers (5) und dem Rohr (1) liegen, wobei sich die Innenwandung des Sattels (3) über die zwischen den Schenkeln liegende Mittelebene des Kunststoffrohres (1) hinaus erstreckt,
daß die innen gelegenen Seitenwandungen des Widerlagers (5) oder Teile der Seitenwandungen des Widerlagers (5) parallel zu dem sich über die zwischen den Schenkeln liegende Mittelebene des Kunststoffrohres (1) hinaus erstreckenden Bereich der Schenkel verlaufen,
daß die Innenwandung des Sattels (3) in ihrem sich über die Mittelebene des Kunststoffrohres (1) hinaus erstreckenden und parallel zu den inneren Seitenwandungen des Widerlagers (5) verlaufenden Teil ebenfalls mit einer mattenförmigen Heizdrahtanordnung versehen ist,
daß die Außenseite des Sattels (3) in ihrem sich über die Mittelebene des Kunststoffrohres (1) hinaus erstreckenden und parallel zu den inneren Seitenwandungen des Widerlagers (5) verlaufenden Teil mit den inneren Seitenwandungen des Widerlagers (5) verschweißt ist,
wobei die Innenfläche der Ansätze (29,32) mit einer Heizwicklung zum Verschweißen versehen ist.

4. Vorrichtung nach Anspruch 1,
dadurch gekennzeichnet,
daß die Schenkel (7) an ihrer dem Widerlager (5) zugewandten Seite eben sind,
daß die sich über die Mittelebene des Kunststoffrohres (1) hinaus erstreckende Innenwandung des Sattels (3) in diesem Bereich genähert tangential weiterverläuft.

5. Vorrichtung nach Anspruch 1, 2 oder 3,
dadurch gekennzeichnet,
daß der Sattel (3) und das Widerlager (5) durch mechanische Klemmvorrichtungen zusammenspannbar sind, die eine Kraftkomponente parallel zur Seitenwand (8) des Widerlagers (5) und eine weitere Kraftkomponente senkrecht zur Seitenwand (8) des Widerlagers (5) ausüben.

6. Vorrichtung nach Anspruch 5,
dadurch gekennzeichnet,
daß die Klemmvorrichtungen aus einer Schraube (9), einer Mutter (10) und einer Feder (11) bestehen.

7. Vorrichtung nach Anspruch 1 und 6,
dadurch gekennzeichnet,
daß schräg zu der Oberfläche der Seitenwandungen (8) des Widerlagers (5) verlaufende Löcher in diesen Seitenwandungen (8) des Widerlagers (5) und mit diesen Löchern fluchtend in den über die Mitte hinausgehenden Schenkeln (7) des Sattels (3) vorgesehen sind.

8. Vorrichtung nach Anspruch 7,
dadurch gekennzeichnet,
daß die Löcher in Seitenwandungen (8) des Widerlagers (5) und in den Schenkeln (7) des Sattels (3) sich durch an diesen angeformten Ansätze (12, 13) erstrecken, die die Form von diagonal geteilten Quadern aufweisen.

9. Vorrichtung nach Anspruch 1,2 oder 3,
dadurch gekennzeichnet,
daß das Widerlager (5) im Bereich der halbschalenförmigen Anlagefläche (14) am Rohr (1) ebenfalls mit einer mattenförmigen Heizdrahtanordnung (15) ausgestattet ist.

10. Vorrichtung nach Anspruch 1,2, oder 3,
dadurch gekennzeichnet,
daß die mattenförmige Heizdrahtanordnung (4) des Sattels (3) aus zwei Heizdrähten (16,17) besteht, welche zickzackförmig geführt jeweils einen Bereich (18) von mehreren langen Drahtschlaufen und daran anschließend einen Bereich (19) von kurzen Drahtschlaufen bilden, die beide um 180° gegeneinander versetzt um die Fläche (20) in der Verlängerung des Rohrstutzens (2) angeordnet sind.

11. Vorrichtung nach Anspruch 10,
dadurch gekennzeichnet,
daß jeweils das Ende des einen Heizdrahtes (16) im Bereich (18) der langen Schlaufen mit dem Ende des anderen Heizdrahtes (17) im Bereich (19) der kurzen Schlaufen in einer Klemmstelle zusammengeklemmt sind, an die weiterhin jeweils ein Draht der Zuführungsleitung elektrischer Energie angeklemmt ist.

12. Vorrichtung nach Anspruch 10,
dadurch gekennzeichnet,
daß die Heizdrahtschlaufen im Bereich (19) kurzer Schlaufen unterschiedliche Längen aufweisen, wobei die kürzeren in der Mitte dieses Bereiches angeordnet sind.

13. Vorrichtung nach Anspruch 1,2 oder 3,
dadurch gekennzeichnet,
daß in der inneren Oberfläche des Sattels (3) rings um die Fläche (20) in der Verlängerung des Rohrstutzens (2) eine Nut für die Aufnahme eines Dichtringes eingeformt ist.

14. Vorrichtung nach Anspruch 1,
dadurch gekennzeichnet,
daß das Widerlager (5) mit Füßen versehen ist.

15. Vorrichtung nach Anspruch 1,
dadurch gekennzeichnet,
daß die Innenfläche des Widerlagers (5) beidseitig in im Querschnitt dreieckförmige Leisten (26) ausläuft, deren Außenseite eine Anschmelzfläche für die Anschweißung der Innenfläche des Sattels (3) bildet.

16. Vorrichtung nach Anspruch 3,
dadurch gekennzeichnet,
daß der Sattel (3) und das Widerlager (5) zu beiden Seiten Vorsprünge (30,31) tragen,
an welchen Befestigungsmittel in Form von sie durchsetzenden Schrauben (9) oder Klammern angebracht sind.

17. Vorrichtung nach Anspruch 3,
dadurch gekennzeichnet,
daß daß die Ansätze dreieckförmige Leisten (29) sind.

## Claims

1. Device for drilling plastic pipes of supply lines (1), consisting of a saddle (3) provided with a radially disposed connecting piece (2) and taking the form of a pipe half shell which is provided with a mat-shaped heating wire arrangement (4) on its inner surface, and of an abutment (5) in the form of a second half shell which has to be clamped mechanically to the saddle (3),
characterised in that limbs (7) running axially parallel in tangential planes adjoin the half-round part of the saddle (3) in one piece on both sides,
in that the inner wall of the saddle (3) extends beyond the median plane of the plastic pipe (1) lying between the limbs (7),
in that the side walls (8) of the abutment (5) or parts of the side walls (8) of the abutment (5) run parallel or at an acute angle with a small number of degrees to the area of the limbs (7) extending beyond the median plane of the plastic pipe (1) lying between the limbs (7),
in that the inner wall of the saddle (3) is also provided with a mat-shaped heating wire arrangement in its part extending beyond the median plane of the plastic pipe (1) and running parallel or at an acute angle with a small number of degrees to the side walls (8) of the abutment (5),
in that the inner wall of the saddle (3) is welded to the side walls (8) of the abutment (5) in its part extending beyond the median plane of the plastic pipe (1) and running parallel to the side walls (8) of the abutment (5).

2. Device for drilling plastic pipes of supply lines (1), consisting of a saddle (3) provided with a radially disposed connecting piece (2) and taking the form of a pipe half shell which is provided with a mat-shaped heating wire arrangement (4) on its inner surface, and of an abutment (5) in the form of a second half shell which has to be clamped mechanically to the saddle (3),
characterised in that limbs running axially parallel tangentially and taking the form of tab-shaped projections (35) partly surrounding the pipe (1) adjoin the half-round part of the saddle (3) in one piece on both sides and lie in a recess of the abutment (5), the inner wall of the saddle (3) extending beyond the median plane of the plastic pipe (1) lying between the limbs, in that the side walls of the abutment (5) or parts of the side walls of the abutment (5) located on the inside run parallel to the area of the limbs (35) extending beyond the median plane of the plastic pipe (1) lying between the limbs,
in that the inner wall of the saddle (3) is also provided with a mat-shaped heating wire arrangement in its part extending beyond the median plane of the plastic pipe (1) and running parallel to the inner side walls of the abutment (5),
in that the outside of the saddle (3) is welded to the inner side walls of the abutment (5) in its part extending beyond the median plane of the plastic pipe (1) and running parallel to the inner side walls of the abutment (5),
the inner surface of the recesses located in the abutment (5) for receiving the limbs (35) being provided with a heating winding (36) for the welding and the inner surface of these elastic limbs (35) also being provided with a heating winding for the welding.

3. Device for drilling plastic pipes of supply lines (1), consisting of a saddle (3) provided with a radially disposed connecting piece (2) and taking the form of a pipe half shell which is provided with a mat-shaped heating wire arrangement (4) on its inner surface, and of an abutment (5) in the form of a second half shell which has to be clamped mechanically to the saddle (3),
characterised in that limbs running axially parallel tangentially and taking the form of triangular tab-shaped elastic projections (29, 32) partly surrounding the pipe (1) adjoin the half-round part of the saddle (3) in one piece on both sides and lie in a wedge between the inner surface of the abutment (5) and the pipe (1), the inner wall of the saddle (3) extending beyond the median plane of the plastic pipe (1) lying between the limbs,
in that the side walls of the abutment (5) or parts of the side walls of the abutment (5) located on the inside run parallel to the area of the limbs extending beyond the median plane of the plastic pipe (1) lying between the limbs,
in that the inner wall of the saddle (3) is also provided with a mat-shaped heating wire arrangement in its part extending beyond the median plane of the plastic pipe (1) and running parallel to the inner side walls of the abutment (5),
in that the outside of the saddle (3) is welded to the inner side walls of the abutment (5) in its part extending beyond the median plane of the plastic pipe (1) and running parallel to the inner side walls of the abutment (5),
the inner surface of the projections (29, 32) being provided with a heating winding for the welding.

4. Device according to claim 1, characterised in that the limbs (7) are flat on their side facing the abutment (5),
in that the inner wall of the saddle (3) extending beyond the median plane of the plastic pipe (1) continues approximately tangentially in this area.

5. Device according to claim 1, 2 or 3, characterised in that the saddle (3) and the abutment (5) can be clamped together by mechanical clamping devices which exert a force component parallel to the side wall (8) of the abutment (5) and a further force component perpendicular to the side wall (8) of the abutment (5).

6. Device according to claim 5, characterised in that the clamping devices consist of a bolt (9), a nut (10) and a spring (11).

7. Device according to claim 1 and 6, characterised in that holes running at an oblique angle to the surface of the side walls (8) of the abutment (5) are provided in these side walls (8) of the abutment (5) and, in alignment with these holes, in the limbs (7) of the saddle (3) going beyond the middle.

8. Device according to claim 7, characterised in that the holes in the side walls (8) of the abutment (5) and in the limbs (7) of the saddle (3) extend through projections (12, 13) which are formed on these and exhibit the shape of diagonally divided parallelepiped blocks.

9. Device according to claim 1, 2 or 3, characterised in that the abutment (5) is also equipped with a mat-shaped heating wire arrangement (15) in the area of the half shell-shaped contact face (14) on the pipe (1).

10. Device according to claim 1, 2 or 3, characterised in that the mat-shaped heating wire arrangement (4) of the saddle (3) consists of two heating wires (16, 17) which are guided in a zigzag pattern and each form an area (18) of a plurality of long wire loops and adjoining it an area (19) of short wire loops, the two of which are disposed offset at 180° to one another around the area (20) in the extension of the pipe connecting piece (2).

11. Device according to claim 10, characterised in that in each case the end of one heating wire (16) in the area (18) of the long loops and the end of the other heating wire (17) in the area (19) of the short loops are clamped together in a clamping point to which again in each case one wire of the electric power supply lead is clamped.

12. Device according to claim 10, characterised in that the heating wire loops in the area (19) of short loops have different lengths, the shorter loops being arranged in the middle of this area.

13. Device according to claim 1, 2 or 3, characterised in that a groove for receiving a sealing ring is formed in the inner surface of the saddle (3) around the area (20) in the extension of the pipe connecting piece (2).

14. Device according to claim 1, characterised in that the abutment (5) is provided with feet.

15. Device according to claim 1, characterised in that on both sides the inner surface of the abutment (5) terminates in extensions (26) which are triangular in cross-section and the outside of which forms a contact surface for the welding of the inner surface of the saddle (3).

16. Device according to claim 3, characterised in that on both sides the saddle (3) and the abutment (5) carry protrusions (30, 31) to which fastening means in the form of bolts (9) passing through them or clamps are attached.

17. Device according to claim 3, characterised in that the projections are triangular extensions (29).

## Revendications

1. Dispositif de perçage de tuyaux en plastique de conduites d'alimentation (1), constitué d'une selle (3), en forme d'une demi-coque tubulaire, qui est munie d'un piquage (2) disposé radialement,
qui est muni, sur sa surface intérieure, d'un agencement de fils chauffants (4) en forme de tapis,
ainsi que d'une contre-portée (5) en forme d'une seconde demi-coque qui doit être mécaniquement accrochée à la selle (3),
caractérisé par le fait
que, des deux côtés, se raccordent d'une pièce avec la partie demi-ronde de la selle (3) des branches (7) orientées parallèlement à l'axe dans des plans tangents,
que la paroi intérieure de la selle s'étend au-delà du plan médian, situé entre les branches (7), du tube en plastique (1),
que les parois latérales (8) de la contre-portée (5), ou des parties des parois latérales (8) à la contre-portée (5), sont orientées parallèlement ou sous un angle aigu d'un petit nombre de degrés par rapport à la zone des branches (7) qui s'étend au-delà du plan médian, situé entre les branches (7), du tube en plastique (1),
que, dans sa partie qui s'étend au-delà du plan médian du tube en plastique (1) et qui est orientée parallèlement ou sous un angle aigu d'un petit nombre de degrés par rapport aux parois latérales (8) de la contre-portée (5), la paroi intérieure de la selle (3) est également munie d'un agencement de fils chauffants en forme de tapis,
que, dans sa partie qui s'étend au-delà du plan médian du tube en plastique (1) et qui est orientée parallèlement aux parois latérales (8) de la contre-portée (5), la paroi intérieure de la selle (3) est soudée aux parois latérales (8) de la contre-portée (5).

2. Dispositif de perçage de tuyaux en plastique de conduites d'alimentation (1), constitué d'une selle (3), en forme d'une demi-coque tubulaire, qui est munie d'un piquage (2) disposé radialement,
qui est muni, sur sa surface intérieure, d'un agencement de fils chauffants (4) en forme de tapis,
ainsi que d'une contre-portée (5) en forme d'une seconde demi-coque qui doit être mécaniquement accrochée à la selle (3),
caractérisé par le fait
que des deux côtés, se raccordent d'une pièce avec la partie demi-ronde de la selle (3) des branches orientées parallèlement à l'axe et tangentiellement, sous forme d'appendices (35), en forme de languette, qui enserrent partiellement le tube (1) et se situent dans un évidement de la contre-portée (5), la paroi intérieure de la selle (3) s'étendant au-delà du plan médian, situé entre les branches, du tube en plastique (1),
que les parois latérales, situées à l'intérieur, de la contre-portée (5) ou des parties des parois latérales de la contre-portée (5) sont orientées parallèlement à la zone des branches (35) qui s'étend au-delà du plan médian, situé entre les branches, du tube en plastique (1),
que, dans sa partie s'étendant au-delà du plan médian du tube en plastique (1) et orientée parallèlement aux parois latérales intérieures de la contre-portée (5), la paroi intérieure de la selle (3) est également munie d'un agencement de fils chauffants en forme de tapis,
que, dans sa partie s'étendant au-delà du plan médian du tube en plastique (1) et orientée parallèlement aux parois latérales intérieures de la contre-portée (5), la face extérieure de la selle (3) est soudée aux parois latérales intérieures de la contre-portée (5), les surfaces intérieures des évidements prévus dans la contre-portée (5) pour loger les branches (35) étant munies d'un enroulement chauffant (36) pour le soudage
et la surface intérieure de ces branches élastiques (35) étant également munie d'un enroulement chauffant pour le soudage.

3. Dispositif de perçage de tuyaux en plastique de conduites d'alimentation (1), constitué d'une selle (3), en forme d'une demi-coque tubulaire, qui est munie d'un piquage (2) disposé radialement,
qui est muni, sur sa surface intérieure, d'un agencement de fils chauffants (4) en forme de tapis,
ainsi que d'une contre-portée (5) en forme d'une seconde demi-coque qui doit être mécaniquement accrochée à la selle (3),
caractérisé par le fait
que, des deux côtés, se raccordent d'une pièce avec la partie demi-ronde de la selle (3) des branches orientées parallèlement à l'axe et tangentiellement, sous forme d'appendices triangulaires élastiques (29, 32) en forme de languette qui enserrent partiellement le tube (1) et se situent dans une lunule entre la surface intérieure de la contre-portée (5) et le tube (1), la paroi intérieure de la selle (3) s'étendant au-delà du plan médian, situé entre les branches, du tube en plastique (1),
que les parois latérales, situées à l'intérieur, de la contre-portée (5) ou des parties des parois latérales de la contre-portée (5) sont orientées parallèlement à la zone des branches qui s'étend au-delà du plan médian, situé entre les branches, du tube en plastique (1),
que, dans sa partie s'étendant au-delà du plan médian du tube en plastique (1) et orientée parallèlement aux parois latérales intérieures de la contre-portée (5), la paroi intérieure de la selle (3) est également munie d'un agencement de fils chauffants en forme de tapis,
que, dans sa partie s'étendant au-delà du plan médian du tube en plastique (1) et orientée parallèlement aux parois latérales intérieures de la contre-portée (5), la face extérieure de la selle (3) est soudée aux parois latérales intérieures de la contre-portée (5), la surface intérieure des appendices (29, 32) étant munie d'un enroulement chauffant pour le soudage.

4. Dispositif selon la revendication 1,
caractérisé par le fait
que, sur leur face orientée vers la contre-portée (5), les branches (7) sont planes,
que la paroi intérieure, qui s'étend au-delà du plan médian du tube en plastique (1), de la selle (3) se poursuit orientée à peu près tangentiellement dans cette zone.

5. Dispositif selon la revendication 1, 2 ou 3,
caractérisé par le fait
que la selle (3) et la contre-portée (5) peuvent être bridées au moyen d'organes de serrage mécaniques qui exercent une composante de force parallèlement à la paroi latérale (8) de la contre-portée (5) et une autre composante de force perpendiculairement à la paroi latérale (8) de la contre-portée (5).

6. Dispositif selon la revendication 5,
caractérisé par le fait
que les organes de serrage sont constitués d'une vis (9), d'un écrou (10) et d'un ressort (11).

7. Dispositif selon les revendications 1 et 6,
caractérisé par le fait
que des trous orientés obliquement par rapport à la surface des parois latérales (8) de la contre-portée (5) sont prévus dans ces parois latérales (8) de la contre-portée (5) et que des trous alignés avec ces trous le sont dans les branches (7), débordant au-delà du milieu, de la selle (3).

8. Dispositif selon la revendication 7,
caractérisé par le fait
que les trous prévus dans des parois latérales (8) de la contre-portée (5).et dans les branches (7) de la selle (3) s'étendent à travers des appendices (12, 13) qui sont formés sur celles-ci et présentent la forme de parallélépipèdes divisés diagonalement.

9. Dispositif selon la revendication 1, 2 ou 3,
caractérisé par le fait
que, dans la zone de la surface d'appui (14) en forme de demi-coque, contre le tube (1), la contre-portée (5) est également équipée d'un agencement de fils chauffants (15) en forme de tapis.

10. Dispositif selon la revendication 1, 2 ou 3,
caractérisé par le fait
que l'agencement de fils chauffants (4) en forme de tapis, de la selle (3) est constitué de deux fils chauffants (16, 17) qui, filant en zigzag, forment chacun une zone (18) de plusieurs longues boucles de fil et, s'y raccordant, une zone (19) de courtes boucles de fil, toutes les deux, décalées de 180° l'une par rapport à l'autre, disposées autour de la surface (20) dans le prolongement du piquage tubulaire (2).

11. Dispositif selon la revendication 10,
caractérisé par le fait
que l'extrémité de l'un des fils chauffants (16) située dans la zone (18) des longues boucles est accrochée à l'extrémité de l'autre fil chauffant (17) situé dans la zone (19) des courtes boucles, en une position d'accrochage où est en outre chaque fois accroché un conducteur de la ligne d'amenée de l'énergie électrique.

12. Dispositif selon la revendication 10,
caractérisé par le fait
que les boucles de fils chauffants situés dans la zone (19) des courtes boucles présentent des longueurs différentes, les plus courtes étant disposées au milieu de cette zone.

13. Dispositif selon les revendications 1, 2 ou 3,
caractérisé par le fait
que dans la surface intérieure de la selle (3), tout autour de la surface (20) située dans le prolongement du piquage tubulaire (2), est formée une rainure pour recevoir une bague d'étanchéité.

14. Dispositif selon les revendications 1,
caractérisé par le fait
que la contre-portée (5) est munie de pieds.

15. Dispositif selon les revendications 1,
caractérisé par le fait
que, des deux côtés, la surface intérieure de la contre-portée (5) se termine en languettes (26), de section de forme triangulaire, dont la face extérieure forme une surface de mise en fusion pour le soudage de la surface intérieure de la selle (3).

16. Dispositif selon la revendication 3,
caractérisé par le fait
que des deux côtés la selle (3) et la contre-portée (5) portent des saillies (30, 31) sur lesquelles sont rapportés des moyens de fixation sous forme de vis (9) qui les traversent.

17. Dispositif selon les revendications 3,
caractérisé par le fait
que les appendices sont des languettes de forme triangulaire (29).
